(19) Europäisches Patentamt
European Patent Office
Office européen des brevets

(11) Publication number: **0 139 061 B1**

(12) **EUROPEAN PATENT SPECIFICATION**

(45) Date of publication of patent specification: **17.04.91**

(51) Int. Cl.[5]: **C08G 75/23**, C08J 5/22, B01J 43/00

(21) Application number: **83307904.9**

(22) Date of filing: **22.12.83**

(54) **Chlorosulphonated polysulphones, their preparation and their use in preparing sulphonated polysulphones.**

(30) Priority: **22.09.83 US 534799**

(43) Date of publication of application:
**02.05.85 Bulletin 85/18**

(45) Publication of the grant of the patent:
**17.04.91 Bulletin 91/16**

(84) Designated Contracting States:
**AT BE CH DE FR GB IT LI LU NL SE**

(56) References cited:
**DE-A- 3 143 804**
**GB-A- 2 090 843**
**US-A- 3 855 122**
**US-A- 4 273 903**
**US-A- 4 414 368**
**GB-A- 2 006 238**
**US-A- 3 709 841**
**US-A- 4 054 707**
**US-A- 4 413 106**

(73) Proprietor: **ALBANY INTERNATIONAL CORP.**
**1373 Broadway**
**Albany New York 12204(US)**

(72) Inventor: **Coplan, Myron J.**
**47 Spleen Street**
**Natick Massachusetts 01760(US)**
Inventor: **Bikson, Benjamin**
**17 Tabor Place No. 3**
**Brookline Massachusetts 02140(US)**
Inventor: **Gotz, Gertrud**
**50 Green Street**
**Brookline Massachusetts 02146(US)**

(74) Representative: **Perry, Robert Edward et al**
**GILL JENNINGS & EVERY 53-64 Chancery Lane**
**London WC2A 1HN(GB)**

**EP 0 139 061 B1**

Note: Within nine months from the publication of the mention of the grant of the European patent, any person may give notice to the European Patent Office of oppositicn to the European patent granted. Notice of opposition shall be filed in a written reasoned statement. It shall not be deemed to have been filed until the opposition fee has been paid (Art. 99(1) European patent convention).

## Description

This invention relates to chlorosulphonated polysulphones and their preparation, and to their use in preparing sulphonated polysulphones which are notoriously difficult to sulphonate. The novel chlorosulphonated polysulphones and their derivatives are useful as membrane-forming materials for a variety of separation processes, e.g. reverse osmosis, ultra-filtration, ion-exchange and electro-dialysis.

US-A-3709841 describes the sulphonation of polyaryl sulphones, in which a proportion of the aromatic rings is substituted with hydroxysulphonyl radicals. There are, however, polyaryl ether sulphones which may be linear or branched, having recurring units of the formula

$$-Ar_1-SO_2-Ar_2-O- \qquad (I)$$

wherein $Ar_1$ and $Ar_2$ are the same or different phenylene radicals optionally substituted with non-deactivating groups (there may also be linking radicals other than the ether oxygen atom which is illustrated). These polymers are notoriously difficult to sulphonate, owing to the electron-withdrawing effect of the sulphone groups. These groups deactivate the adjacent aromatic rings for electrophilic substitution. Sulphonation of these polymers with chlorosulphonic acid or oleum at ambient temperatures requires an enormous excess of the sulphonation agent and results in a highly degraded product. The degree of sulphonation is impossible to control. The surplus of sulphonation agent complicates the work-up procedures (see US-A-4273903, Examples 10, 11 and 12).

In order to overcome the above difficulties, copolymers of such polysulphones have been prepared which contain, in addition to the units (I), varying amounts of relatively easily sulphonatable units of formula II

$$-O-Ph-O-Ph-SO_2-Ph- \qquad (II)$$

wherein Ph is 1,4-phenylene. Such polymers are described in US-A-4273903 (cited above).

In general, polysulphones have been sulphonated in a homogeneous phase reaction. This has involved dissolving the polymer in a solvent before the sulphonating agent is added.

A heterogeneous sulphonation process for polyaryl ether sulphones is described and claimed in EP-A-0112724.

A chlorosulphonated polyaryl ether sulphone resin according to the present invention is one in which the polyaryl ether sulphone is of formula I as defined above, and which is additionally substituted by (as well as any optional non-deactivating groups) hydroxysulphonyl groups and chlorosulphonyl groups, in which the ratio of chlorosulphonyl groups to hydroxysulphonyl groups is from 0.01:1 to 20:1, and the combined contents of hydroxysulphonyl and chlorosulphonyl groups are from 0.05 to 4 meq/g of dry resin.

A chlorosulphonated resin of the invention may be prepared by reacting a solution of the polyaryl ether sulphone in an inert organic solvent with from 0.2 to 10 moles, per mole of the polyaryl ether sulphone, of chlorosulphonic acid, at 40-151 °C. In the course of chlorosulphonation, the aromatic rings of the polymer chain are substituted with sulphonyl and chlorosulphonyl groups. The degree of substitution is controlled by the molar ratio of the reactants and the reaction temperature and duration. The first parameter can be varied to affect the ratio of $SO_2Cl$:$SO_3H$ groups in the product, while the second and third parameters can be used to control the overall degree of substitution. Relatively high amounts of chlorosulphonic acid favour the formation of chlorosulphonyl groups.

The reaction may be conducted by simple admixture of the polymer and chlorosulphonic acid. The reaction temperature is preferably from 70-120 °C.

The "inert organic solvent" is a solvent for the polysulphone which does not react with either reactant or adversely affect the desired course of reaction. Chlorosulphonic acid itself may be used as the solvent. Other suitable solvents are halogenated hydrocarbons such as 1,2-dichloroethane and 1,1,2,2-tetrachloroethane.

On the addition of chlorosulphonic acid to a solution of polysulphone in a chlorinated hydrocarbon, phase separation frequently takes place, prior to any sensible degree of reaction. The heavier phase consists of the entire amount of the polymer dissolved in a mixed solvent of chlorosulphonic acid and some chlorinated hydrocarbon; the top layer consists essentially of the chlorinated hydrocarbon. It is advantageous, therefore, to use a concentration of polysulphone in a mixture of chlorosulphonic acid and

chlorinated hydrocarbon which leads to a single homogeneous phase at ambient temperature. The reaction mixture is then brought to the desired temperature, to accomplish the chlorosulphonation. Alternatively, the chlorosulphonic acid can be added to a solution of polysulphone in chlorinated hydrocarbon, which is kept at the desired reaction temperature.

Whether or not an initial homogeneous solution is prepared, in the course of the chlorosulphonation reaction a phase separation can take place, with the heavier layer consisting of a mixture of partially chlorosulphonated polymer, the chlorosulphonic acid and a small amount of chlorinated hydrocarbon, and the top layer being essentially only chlorinated hydrocarbon. The reaction is continued until the desired level of chlorosulphonation is reached.

When the desired degree of reaction has been reached, the reaction mixture may be allowed to cool to ambient temperature, and the desired reacted polymer may be separated from the reaction mixture by conventional techniques such as by decantation, followed by washing and drying.

The chlorosulphonation reaction can also be carried out in neat chlorosulphonic acid. A viscous "dope" is prepared by dissolution of the polysulphone in chlorosulphonic acid at ambient temperature; heating the dope to the desired temperature causes chlorosulphonation.

The chemical structure of the resins of the invention and the extent of their substitution has been confirmed by high resolution 270 MHz NMR spectroscopy, IR spectroscopy and microanalytical determination of chlorine and sulphur contents. The resins of the invention are generally soluble in polar solvents such as dimethylformamide (DMF) and dimethylacetamide (DMAC). The resins with a high degree of chlorosulphonation, and high $-SO_3H$ to $-SO_2Cl$ group ratios, are also soluble in alcohol/water mixtures.

Membranes can be advantageously prepared from the chlorosulphonated resins of the invention by casting a solution of the resin onto a surface of a dense support or onto the surface of a porous support, followed by evaporation of the solvent. Reinforced membranes can be prepared by casting onto a screen or a woven fabric. The membranes can be cross-linked by reacting the active chlorosulphonyl groups with polyfunctional amines, to make the membranes more dense and insoluble, with a concomitant increase in selectivity. The chlorosulphonic groups remaining in any cast film can also be utilised for further derivatisation with mono-and poly-functional amines and alcohols, to alter the transport properties and permselectivity of the membranes. The casting solvents to be used in the latter cases should be dry and inert towards chlorosulphonyl groups, to achieve the maximum degree of derivatisation.

The chlorosulphonated resins can be derivatised by reacting them with substances that contain reactive amino or hydroxyl groups. Membranes are prepared from these derivatives by casting from suitable polar solvents, e.g. DMF and DMAC. As a specific example, chlorosulphonated polysulphones are reacted with polyfunctional amines through primary or secondary amine groups, to give ion-exchange resin materials with mixed strong cation-exchange and weak anion-exchange sites. The ratio of sulphonic acid ($-SO_3H$) to weakly anionic ($-NH_2$, -NH- or -N=) groups varies from 0.05 to 25:1, with the degree of substitution of the aromatic rings for both the cationic and anionic sites ranging from 0.05 to 0.6 (the degree of substitution is defined per aromatic ring). The ion-exchange resin with mixed strong cationic and weak anionic tertiary amine groups can be further reacted with a haloalkane, to yield an ion-exchange resin with mixed strong cation-exchange sites and strong anion-exchange sites (quaternary ammonium groups).

Finally, the chlorosulphonyl substituents of the reacted polymer can be hydrolysed with boiling water, or further reacted with a base which gives the sulphonated derivatives in the free acid or alkali, or any other counter-ion form. Membranes of sulphonated polysulphones thus prepared can be prepared by casting from polar solvents.

The resins of the invention are particularly useful as ion-exchange membranes for industrial separation processes and, in particular, the reverse osmosis desalination of liquids. The membranes can be used in flat sheet, tubular or hollow-fibre form.

Reverse osmosis membranes of superior productivity can be prepared by coating the materials of the invention on porous flat sheets, inside-flow tubes and porous hollow fibres, to form composite membranes. Alternatively, asymmetric membranes can be prepared by casting and solution spinning techniques. Composite membranes prepared as described above can possess high product flow rates combined with high degrees of salt rejection.

The following Examples 1, 5, 6, 8, 9 and 10 illus trate the chlorosulphonation process of the invention. Example 2 illustrates the hydrolysis reaction, Examples 3, 11 and 12 the amination reaction, Example 4 the haloalkane reaction and Example 7 the reaction with an alcohol. In all cases, the polysulphone used as a starting material had recurring units of the formula $-Ph-SO_2-Ph-O-$ (Ph being 1,4-phenylene), sold under the trade name Victrex PES-600P and obtained from ICI Ltd. Intrinsic viscosities (IV) were measured in a 0.5N $NaClO_4$ solution in dimethylformamide, at 25 C.

EXAMPLE 1

100 g of the polysulphone, pre-dried for 4 hours at 150 C, were dissolved in 114 $cm^3$ chlorosulphonic acid (2 moles per aromatic ring). The reaction mixture was slowly stirred for 2 hours at room temperature under a nitrogen gas atmosphere, and then the reaction temperature was raised to circa 82 C and kept at this temperature for 30 minutes. The hydrochloric acid which evolved was stripped by the nitrogen and trapped in sodium hydroxide solution. The reaction mixture was cooled to 0 °C, and the reaction terminated by addition of 500 $cm^3$ cold isopropyl alcohol. The resultant precipitate was washed twice, each time with an additional 500 $cm^3$ cold isopropyl alcohol, and then dried in a vacuum oven (13 Pa), to a constant weight. The yield of the polymeric product was 105 g.

Analysis of the reaction product indicated that it was a partially-sulphonated, partially-sulphochlorinated polymer with almost equal amounts of hydroxysulphonyl and chlorosulphonyl groups. The concentration of $-SO_3H$ and $-SO_2Cl$ groups were 1.75 and 1.65 meq/g, respectively. IV = 0.13.

EXAMPLE 2

50 g of chlorosulphonated polysulphone prepared as in Example 1 were dissolved in 500 $cm^3$ boiling water, and refluxed for 2 hours. The water was distilled off to yield 48 g of water-soluble sulphonated polysulphone with an ion-exchange capacity (IEC) equal to 3.4 meq/g dry resin.

EXAMPLE 3

50 g of the chlorosulphonated polysulphone prepared as in Example 1 were dissolved in 100 $cm^3$ dry dimethylformamide, and 20 g 3-dimethylaminopropylamine were added. The reaction mixture was stirred at room temperature for one hour, and then poured into a saturated aqueous NaCl solution. The gel-like precipitate was separated, suspended in deionised water and dialysed. The dialysed suspension was rotary-evaporated to dryness to yield 54 g of polymeric product.

The polymeric product contained strong cation-exchange ($-SO_3Na$) and weak tertiary amine sites in almost equimolar amounts, 1.7 and 1.6 meq/g, respectively. Nitrogen content of the product, as determined by microanalysis, was 4.7%.

EXAMPLE 4

25 g of mixed cationic weakly anionic polysulphone prepared as in Example 3 were suspended in 100 $cm^3$ 0.1N KOH in methanol. 10 $cm^3$ methyl iodide were added to the reaction mixture which was then refluxed for one hour. The polymeric product, in the form of a gel-like layer, was isolated, suspended in deionised water and dialysed. The dialysed solution was rotary-evaporated to dryness. The yield of water-soluble polymer, with mixed strong cation ($-SO_3^-$) and strong anion exchange functional groups [$N^+(CH_3)_4$] was 25.3 g. Nitrogen content of the product, as determined by microanalysis, was 4.4.%.

EXAMPLE 5

100 g of polysulphone, pre-dried for 4 hours at 150 °C, were dissolved in 500 $cm^3$ 1,1,2,2-tetrachloroethane at room temperature. The solution, kept under positive $N_2$ pressure, was brought to 130 °C, and 42.5 $cm^3$ chlorosulphonic acid (0.75 moles per aromatic ring) were added to the reaction mixture within a 2 minute period. The reaction mixture was kept at 150 °C for 15 minutes, and then quickly cooled to room temperature. The top layer (almost exclusively tetrachloroethane) was decanted and the sludge precipitate dissolved in 500 $cm^3$ isopropyl alcohol/$H_2O$ (90/10 by volume). The solution was rotary-evaporated to dryness, and the residual polymer dried in a vacuum oven at room temperature to a constant weight. The yield of sulphonated polysulphone was 113 g. IEC = 1.7 meq/g; IV = 0.13.

EXAMPLE 6

100 g of polysulphone, pre-dried for 4 hours at 150 °C were suspended in 500 $cm^3$ 1,2-dichloroethane. The reaction mixture, kept under a nitrogen atmosphere, was brought to reflux. 42.5 $cm^3$ chlorosulphonic acid (0.75 moles per aromatic ring) were added to the reaction mixture within a 2 minute period, whereupon the originally sludgy solution became clear. However, the solution separated into two phases as the sulphonation advanced. After 40 minutes, the reaction was stopped, by rapid cooling to room temperature. The top layer (almost exclusively dichloroethane) was decanted and the sludgy precipitate dissolved in 500 $cm^3$ isopropyl alcohol/$H_2O$) (90/10 by volume). The solution was rotary-evaporated to dryness and the residual polymer dried to a constant weight (13 Pa) in a vacuum oven at room temperature, to yield 110 g of sulphonated polysulphone. IV=0.15; IEC=1.8 meq/g of dry resin.

EXAMPLE 7

5 g of the sulphonated polysulphone prepared as in Example 6 were dissolved in 100 $cm^3$ isopropyl alcohol/water (90/10 by volume). A composite hollow fibre membrane was then prepared by coating a porous polysulphone hollow fibre continuously with the prepared coating solution, the solvents being removed by drying to 120 °C.

The composite hollow fibre membranes, when utilised in reverse osmosis desalination process of 3000 ppm brackish water, gave 96-98% salt rejection and fluxes between 1.5 and 2 gfd at a pressure of 2750 kPa (400 psi). The composite hollow fibre membranes were found to be durable in an oxidative environment. Lifetimes over 3000 hours were found to be common for the composite membranes, tested against brackish water containing 100 ppm active chlorine as OCl-, at pH 8.

EXAMPLE 8

The polysulphone was treated with chlorosulphonic acid as described in Example 6, except that the reaction product was precipitated with dry isopropyl alcohol, washed with isopropyl alcohol twice and dialysed. The reaction product was freeze-dried and then vacuum-dried (13 Pa) at room temperature to constant weight, to give a partially-sulphonated, partially-sulphochlorinated polymer. The concentrations of $-SO_3H$ and $-SO_2Cl$ groups were 1.55 and 0.2 meq/g, respectively.

EXAMPLE 9

The polysulphone was treated with chlorosulphonic acid as described in Example 6, except that the reaction time was 30 minutes. For the sulphonated polysulphone product, IV-0.18 and IEC=1.5 meq/g.

EXAMPLE 10

50 g of the polysulphone, pre-dried for 4 hours at 150 °C, were dissolved at room temperature in 252 g chlorosulphonic acid (5 moles of acid per aromatic ring). The reaction mixture, kept under a dry nitrogen atmosphere, was brought to 75 °C and stirred at this temperature for 30 minutes. The hydrochloric acid which evolved was trapped in 1N NaOH. After 30 minutes, the reaction was cooled rapidly to room temperature and the viscous dope poured into isopropyl alcohol/methylene chloride (50/50 v/v) cooled to 0 °C. The precipitate was washed with isopropyl alcohol, placed in cellulose acetate dialysis tubes and dialysed for 48 hours. The dialysate was freeze-dried and subsequently dried in a vacuum oven (13 Pa) at room temperature to constant weight, to yield 55 g of partially-sulphonated, partially-sulphochlorinated polysulphone. The concentrations of $-SO_2Cl$ and $-SO_3H$ groups were 2.4 and 0.25 meq/g, respectively.

EXAMPLE 11

The polysulphone was treated with chlorosulphonic acid as described in Example 10, except that, after the reaction, the top layer was decanted and the reaction mixture cooled to 5 °C. 100 $cm^3$ benzene were then added with vigorous stirring, followed by a solution of 50 g 3-dimethylaminopropylamine and 50 g of pyridine in 200 $cm^3$ dimethylformamide. The reaction mixture, kept at 5 C, was stirred for 4 hours and then

poured into saturated sodium chloride solution, washed exhaustively with saturated sodium chloride solution and dialysed. The dialysate was rotary-evaporated to dryness and the residual polymer dried to constant weight in a vacuum oven (13 Pa) at 50 °C to yield 62 g of partially-sulphoaminated, partially-sulphonated polysulphone. The concentrations of $-SO_3Na$ and $-SO_2NH(CH_2)_3N(CH_3)$ groups were 0.8 and 2.0 meq/g, respectively.

EXAMPLE 12

10 g of the chlorosulphonated Victrex prepared as in Example 10 were dissolved in 30 $cm^3$ dimethylformamide distilled over calcium hydride. The solution was cast onto a glass plate and drawn down to a thickness of 0.1 mm with a Gardner knife. The solvent was swept with a stream of dry nitrogen at 60 C in a circulating air oven and the dried in a vacuum oven (13 Pa). The resultant film was cross-linked with a 10% solution of 1,6-hexanediamine in dry ethyl ether at room temperature. The cross-linked ion-exchange membrane was insoluble in dimethylformamide. It was washed with deionised water and dried at room temperature. The ion-exchange capacity of the resultant membrane was 2.0 meq/g, its water content 27% and its electrical resistance -8 ohm/$cm^2$. The perm-selectivity of the membrane, estimated by measuring the membrane potential between the 0.1N and 1N KCl solutions, was 95% of theoretical.

## Claims

1. A chlorosulphonated polyaryl ether sulphone resin, in which the polyaryl ether sulphone is linear or branched and , comprising only repeating units of the formula
$-Ar_1-SO_2-Ar_2-O-$
wherein $Ar_1$ and $Ar_2$ are the same or different phenylene radicals, optionally substituted by non-deactivating groups; and in which the polyaryl ether sulphone is substituted by hydroxysulphonyl groups and chlorosulphonyl groups, the ratio of chlorosulphonyl groups to hydroxysulphonyl groups is from 0.01:1 to 20:1, and the combined contents of hydroxysulphonyl and chlorosulphonyl groups are from 0.05 to 4 meq/g of dry resin.

2. A membrane comprising a chlorosulphonated polysulphone resin according to claim 1.

3. A semi-permeable composite membrane comprising a thin semi-permeable film of a chlorosulphonated polysulphone resin according to claim 1 deposited on one side of a micro-porous substrate.

4. A process for the chlorosulphonation of a polyaryl ether sulphone as defined in claim 1, which comprises reacting a solution of the polyaryl ether sulphone in an inert organic solvent with from 0.2 to 10 moles, per mole of the polyaryl ether sulphone, of chlorosulphonic acid, at from 40 to 151 °C.

5. A process for preparing a sulphonated polyaryl ether sulphone containing from 0.05 to 4 meq/g hydroxysulphonyl radicals in the form of free acid, which comprises hydrolysing a resin according to claim 1 or the product of a process according to claim 4.

6. A process according to claim 5, in which the sulphonated pohysulphone is in the form of an ammonium or alkaline earth metal salt.

7. A process for preparing an ion-exchange resin 5 material with mixed strong cation-exchange and weak anion-exchange sites, which comprises reacting a resin according to claim 1 or the product of a process according to claim 4 with a primary or secondary mono or poly-functional amine, in which the ratio of sulphonic 10 acid to weakly anionic groups in the material is from 0.05:1 to 25:1 and the degree of substitution of the aromatic rings with both strong cationic and anionic sites is from 0.05 to 0.6.

8. A process for preparing an ion-exchange resin 15 material with mixed strong cation-exchange sites and strong anion-exchange sites in the form of quaternary ammonium groups, which comprises reacting a product of a process according to claim 7 with a haloalkane.

9. A process for preparing a linear or cross-linked 20 ion-exchange resin material with strong cation-exchange sites and sulphoester linkages, with comprises reacting a resin according to claim 1 or the product of a process according to claim 4 with a mono or poly-functional alcohol.

## Revendications

1. Résine de polyaryléthersulfone chlorosulfonée, dont la polyaryléthersulfone est linéaire ou ramifiée et comprend seulement des motifs répétés de formule
$-Ar_1-SO_2-Ar_2-O-$
dans laquelle $Ar_1$ et $Ar_2$ sont des radicaux phénylène identiques ou différents facultativement substitués par des groupes non désactivateurs ; et la polyaryléthersulfone est substituée par des groupes hydroxysulfonyle et chlorosulfonyle, le rapport des groupes chlorosulfonyle aux groupes hydroxysulfonyle ayant une valeur de 0,01:1 à 20:1 et des teneurs combinées en groupes hydroxysulfonyle et chlorosulfonyle allant de 0,05 à 4 meq/g de résine sèche.

2. Membrane comprenant une résine de polysulfone chlorosulfonée suivant la revendication 1.

3. Membre composite semi-perméable comprenant un mince film semi-perméable d'une résine de polysulfone chlorosulfonée suivant la revendication 1 déposé sur un côté d'un substrat microporeux.

4. Procédé de chlorosulfonation d'une polyaryléthersulfone telle que définie dans la revendication 1, qui consiste à faire réagir une solution de la polyaryléthersulfone dans un solvant organique inerte avec 0,2 à 10 modes, par mode de la polyaryléthersulfone, d'acide chlorosulfonique à 40-151 °C.

5. Procédé de préparation de polyaryléthersulfone sulfonée contenant 0,05 à 4 meq/g de radicaux hydroxysulfonyle sous la forme acide libre, qui comprend l'hydrolyse d'une résine suivant la revendication 1 ou du produit d'un procédé suivant la revendication 4.

6. Procédé suivant la revendication 5, dans lequel la polysulfone sulfonée est sous la forme d'un sel d'ammonium ou d'un sel de métal alcalino-terreux.

7. Procédé de préparation d'une résine d'échange ionique présentant des sites mixtes d'échange cationique forts et d'échange anionique faibles, qui consiste à faire réagir une résine suivant la revendication 1 ou le produit d'un procédé suivant la revendication 4 avec une amine monofonctionnelle ou polyfonctionnelle primaire ou secondaire, le rapport des groupes acide sulfonique aux groupes anioniques faibles dans la matière allant de 0,05:1 à 25:1 et le degré de substitution des noyaux aromatiques avec des sites cationiques forts et des sites anioniques forts allant de 0,05 à 0,6.

8. Procédé de préparation d'une résine d'échange ionique présentant des sites mixtes d'échange cationique forts et d'échange anionique forts sous forme de groupes ammonium quaternaire, qui consiste à faire réagir un produit d'un procédé suivant la revendication 7 avec un alcane halogéné.

9. Procédé de préparation d'une résine linéaire ou réticulée d'échange ionique présentant des sites d'échange cationique forts et des liaisons sulfo-ester, qui consiste à faire réagir une résine suivant la revendication 1 ou le produit d'un procédé suivant la revendication 4 avec un alcool monofonctionnel ou polyfonctionnel.

## Ansprüche

1. Ein chlorsulfoniertes Polyarylethersulfonharz, worin das Polyarylethersulfon gerade oder verzweigt ist und nur wiederkehrende Einheiten der Formel
$-Ar_1-SO_2-Ar_2-O-$
umfaßt, worin $Ar_1$ und $Ar_2$ gleiche oder verschiedene Phenylenreste darstellen, die gegebenenfalls durch nichtdesaktivierende Gruppen substituiert sind; und worin das Polyarylethersulfon durch Hydroxysulfonylgruppen und Chlorsulfonylgruppen substituiert ist, wobei das Verhältnis von Chlorsulfonylgruppen zu Hydroxysulfonylgruppen von 0,01:1 bis 20:1 beträgt und wobei der Gesamtgehalt an Hydroxysulfonylgruppen und Chlorsulfonylgruppen von 0,05 bis 4 Milliäquivalente/g trockenes Harz beträgt.

2. Eine Membran, umfassend ein chlorsulfoniertes Polysulfonharz nach Anspruch 1.

3. Eine semipermeable Verbundmembran, umfassend einen dünnen semipermeablen Film aus einem chlorsulfonierten Polysulfonharz nach Anspruch 1, der auf eine Seite eines mikroporösen Substrats aufgebracht ist.

4. Verfahren zur Chlorsulfonierung eines Polyarylethersulfons, wie in Anspruch 1 definiert, welches Verfahren ein Umsetzen einer Lösung des Polyarylethersulfons in einem inerten organischen Lösungsmittel mit 0,2 bis 10 Mol Chlorsulfonsäure je Mol Polyarylethersulfon bei 40 bis 151 °C umfaßt.

5. Verfahren zur Herstellung eines sulfonierten Polyarylethersulfons mit einem Gehalt an 0,05 bis 4 Milliäquivalenten Hydroxysulfonylresten je Gramm in Form von freier Säure , welches Verfahren ein Hydrolysieren eines Harzes nach Anspruch 1 oder des Produktes eines Verfahrens nach Anspruch 4 umfaßt.

6. Verfahren nach Anspruch 5, worin das sulfonierte Polysulfon in Form eines Ammonium- oder Erdalkalimetallsalzes vorliegt.

7. Verfahren zur Herstellung eines Ionenaustauschharzmaterials mit gemischten stark kationischen Austauschstellen und schwach anionischen Austauschstellen, welches Verfahren ein Umsetzen eines Harzes nach Anspruch 1 oder des Produktes eines Verfahrens nach Anspruch 4 mit einem primären oder sekundären, mono- oder polyfunktionellen Amin umfaßt, wobei das Verhältnis von Sulfonsäuregruppen zu schwach anionischen Gruppen in dem Material von 0,05:1 bis 25:1 beträgt und der Substitutionsgrad der aromatischen Ringe mit sowohl stark kationischen als auch anionischen Stellen von 0,05 bis 0,6 beträgt.

8. Verfahren zur Herstellung eines Ionenaustauschharzmaterials mit gemischten stark kationischen Austauschstellen und stark anionischen Austauschstellen in Form von quarternären Ammoniumgruppen, welches Verfahren ein Umsetzen eines Produktes eines Verfahrens nach Anspruch 7 mit einem Halogenalkan umfaßt.

9. Verfahren zur Herstellung eines linearen oder vernetzten Ionenaustauschharzmaterials mit stark kationischen Austauschstellen und Sulfoesterverknüpfungen, welches Verfahren ein Umsetzen eines Harzes nach Anspruch 1 oder des Produktes eines Verfahrens nach Anspruch 4 mit eimen mono- oder polyfunktionellen Alkohol umfäßt.